# EUROPEAN PATENT SPECIFICATION

(11) **EP 2 961 296 B1**
(45) Date of publication and mention of the grant of the patent: **25.01.2017**
(21) Application number: 14708670.6
(22) Date of filing: 11.02.2014
(51) Int. Cl.: A47J 31/36

(54) **INFUSION DEVICE FOR THE PRODUCTION OF A HOT DRINK**
INFUSIONSVORRICHTUNG ZUR HERSTELLUNG EINES HEISSGETRÄNKS
DISPOSITIF D'INFUSION POUR LA PRODUCTION D'UNE BOISSON CHAUDE

(30) Priority: 01.03.2013 IT BS20130026
(43) Date of publication of application: 06.01.2016
(73) Proprietor: Bialetti Industrie S.p.A., 25030 Coccaglio, Brescia (IT)
(72) Inventor: MAZZILLI, Angelo, I-25030 Coccaglio (Brescia) (IT)
(74) Representative: Pulieri, Gianluca Antonio
(86) International application number: PCT/IB2014/058911
(87) International publication number: WO 2014/132158

(56) References cited:
- WO-A1-2008/046740
- WO-A1-2010/004376
- WO-A1-2012/020343
- WO-A2-2009/043630
- DE-A1-102009 052 521

## Description

The object of the present invention is an infusion device for an electric machine for the production of a hot drink, such as coffee, tea, herbal teas and the like. In particular, the object of the present invention is a capsule or pod infusion device, i.e. suitable for extracting the drink by operating on a capsule or pod containing a composition, for example in powder or in leaves. An example of such machine is disclosed in WO-A2-2009/043630.

As is known, in the field of electric machines for the production of coffee, machines that use a capsule or a pod containing the coffee powder have recently undergone a huge development. Such machines have many advantages, which have sanctioned the huge commercial success thereof.

The core of such machines consists of an infusion device, which receives the capsule or pod inserted by the user, injects the hot water into the capsule or pod, collects the brew that comes out therefrom and conveys it towards an outlet where a takeaway container (for example a glass, a cup or a small cup) is arranged, and releases the used capsule or pod.

As is understood, the infusion device, which performs the above functions, has a remarkable design and structural complexity, which often affects the reliability of the component.

The object of the present invention is to provide an infusion device particularly simple and suitable to meet the above requirements.

Such object is achieved by an infusion device made according to claim 1. The dependent claims describe embodiment variations.

The features and the advantages of the infusion device according to the present invention will appear more clearly from the following description, made by way of an indicative and non-limiting example with reference to the accompanying figures, in which:

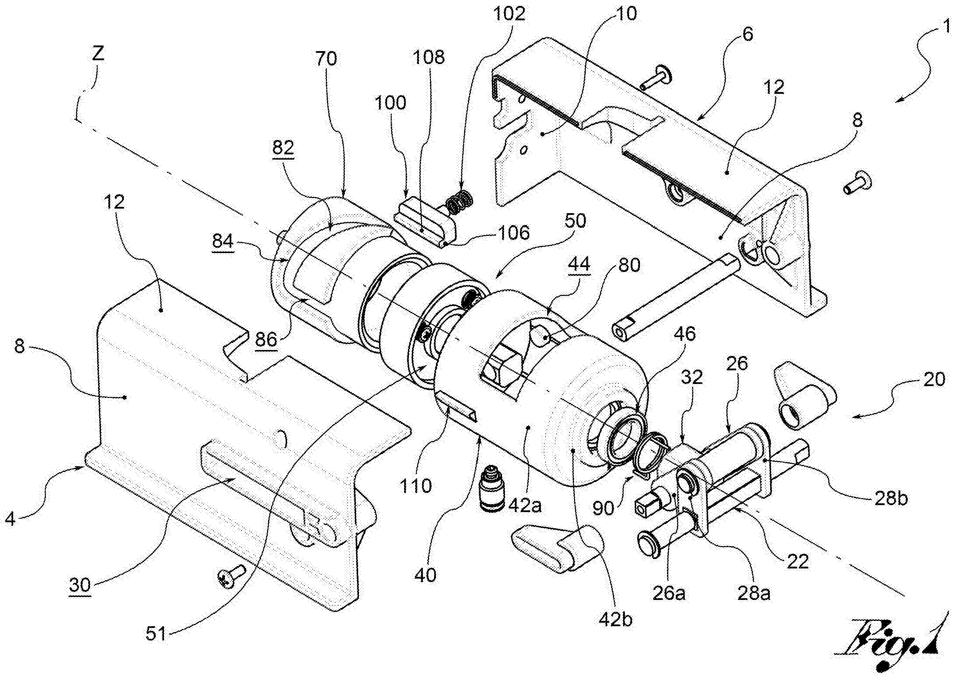

- figure 1 shows a diagram of an infusion device according to the present invention, with separate parts;

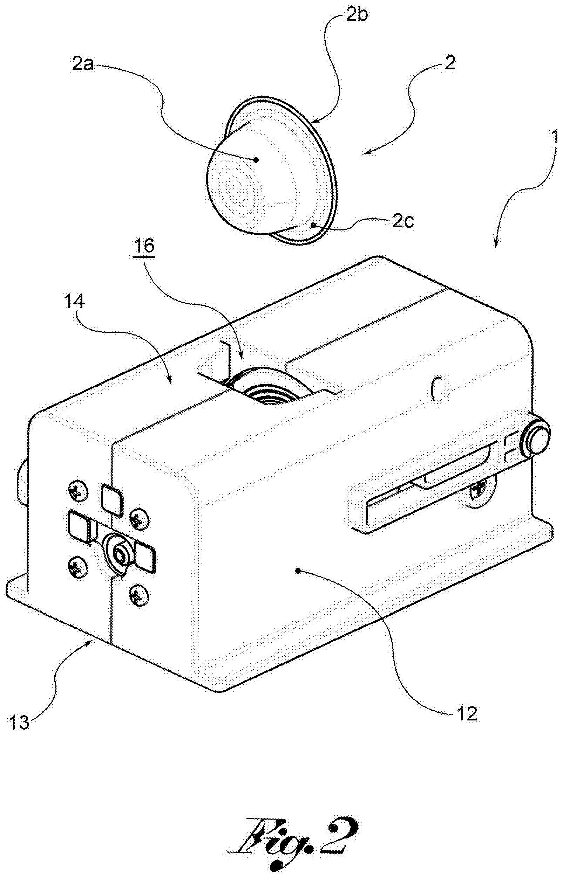

- figure 2 shows the infusion device in figure 1, with assembled parts;

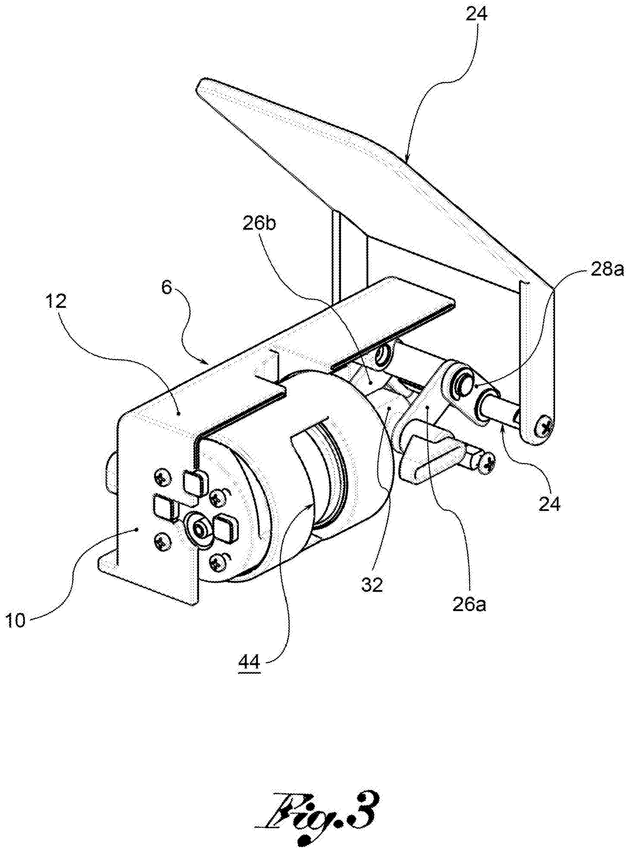

- figure 3 shows the infusion device in figure 1, with partly assembled parts, with mechanical control;
- figure 4a shows a longitudinal section of the infusion device, in an initial open configuration;
- figure 4b shows a cross section of the infusion device, in an initial open configuration;
- figure 5 shows a longitudinal section of the infusion device, in an intermediate closed configuration;
- figure 6 shows a longitudinal section of the infusion device, in a closed configuration;
- figure 7a shows a longitudinal section of the infusion device, in an intermediate reopening configuration;
- figure 7b shows a cross section of the infusion device, in an intermediate reopening configuration;
- figure 8 shows a longitudinal section of the infusion device, in a capsule falling configuration;
- figure 9 shows the infusion device in the embodiment variation with electric control.

With reference to the accompanying figures, an electric machine for the production by infusion of a hot drink, such as coffee, tea, herbal teas and the like, comprises an infusion device 1 for the extraction by infusion of the drink from a capsule 2 or a pod, containing a composition, for example, in powder or leaves.

Generally, capsule 2 comprises a container 2a, ending in a collar 2c, and a peelable film 2b, closing container 2a, generally welded or glued to collar 2c.

Device 1 comprises a casing, for example comprising a pair of half-casings 4, 6, which can be coupled to each other.

For example, each semi-casing 4, 6 comprises a side wall 8 having a predefined height and a prevailing longitudinal extension, a bottom wall 10 and a top wall 12. When the two half-casings 4, 6 are coupled, the side walls 8 are transversely distanced from one another, the bottom walls 10 are contiguous and coplanar and form a bottom 13 of the casing, and the top walls 12, which are contiguous and coplanar as well, form a top cover 14 of the casing.

Cover 14 of the casing has a shaped opening 16 for inserting capsule 2. Preferably, opening 16 has the shape of the capsule, so that the capsule can only be inserted according to a predefined arrangement.

The infusion device 1 further comprises an actuator group 20 comprising a driver pin 22 which is rotatable, for example mechanically, using a lever 24 and supported by a fixed support, for example the casing.

The actuator group 20 further comprises a connecting rod 26, hinged at the top to an axis parallel to and offset from the rotation axis of the driver pin 22 and integral in rotation with said driver pin 22, while the foot is alternately translating along a rectilinear path which defines a longitudinal axis Z, guided in grooves 30 formed in the fixed support, for example in the side walls of the casing.

For example, the connecting rod 26 comprises a pair of crosspieces 26a, each hinged to a respective flap 28a, 28b integral in rotation with the driver pin 22. The two flaps 28a, 28b and the respective crosspieces 26a, 26b are distanced along the rotation axis of the driver pin.

The actuator group 20 further comprises, preferably, a translating member 32, fixed to the foot of the connecting rod 26, generally made as an elongated cylindrical body along the longitudinal axis Z.

The infusion device 1 further comprises a sleeve 40, comprising a substantially cylindrical side wall 42a, which extends along the longitudinal axis Z, and a bottom wall 42b.

The side wall 42a is provided with an insertion window 44 suitable for the passage of capsule 2.

In particular, a capsule seat 42c is made in sleeve 40, which is accessible through window 44, for housing collar 2c of capsule 2.

Furthermore, the infusion device 1 comprises a plate group 50 and a housing group 70, mutually engageable for retaining capsule 2 therebetween.

In particular, the plate group 50 comprises a stem group 51, comprising a stem 52, having the extension along the longitudinal axis Z, provided with an inner duct 54 which can be connected on one side to water supply means suitable for supplying water, and a plate 53 placed the other side of stem 52, through which the inner duct 54 protrudes with an outlet gap 55.

According to an embodiment of the device for capsules, plate 53 has a plurality of puncturing bits, protruding from the surface on which the outlet gap 55 opens, for puncturing the capsule film.

The plate group 50 further comprises an annular head 56, supported by stem 52 and sliding thereon, suitable for sealingly engaging on capsule 2, in contact with film 2b, along a circumferential sealing rim 58. The outlet gap 55 of the inner duct 54 is inside the sealing rim 58.

Head 56 of the plate group 50 is contained within sleeve 40, while stem 52 partially protrudes from said sleeve 40, through the bottom wall 42b, connecting the translating member 32 of the actuator group 20.

Preferably, the plate group 50 comprises pressure means 60, for example comprising a clip, suitable to permanently act so as to reciprocally distance sleeve 40 from head 56 or for the exit of the puncturing tips relative to the sealing rim 58, when provided.

The side wall 42a of sleeve 40 is rotatably supported by stem 52 via a rolling bearing 46, so that sleeve 40 is rotatable about the longitudinal axis Z and translating along said longitudinal axis Z.

Head 56 of the plate group 50, sliding on stem 52, is suitable for sliding between
- an advanced limit position, in which it is in abutment against plate 53, in which the sealing rim 58 is maximally projecting from stem 52 but does not hinder the insertion of capsule 2 through opening 16 of the casing and window 44 of sleeve 40, and
- a retracted limit position, in which head 56 is maximally close to the bottom wall 42b of sleeve 40, and the spring of the compression means is maximally compressed.

The housing group 70 includes a housing body 72 fixed to a fixed support, for example to bottom 13 of the casing.

On the front, i.e. the side facing the plate group 50, body 72 has a seat 74, shaped in the shape of container 2a of capsule 2, accessible from a seat opening 76. Said opening 76 is circumferentially delimited by a seat rim 78 and preferably, the seat rim 78 is contained inside the sealing rim 58 of head 56 of the plate group 50.

On the back, instead, body 72 has an outlet duct 76, in communication on one side with the bottom of seat 74, and on the other ending in an outlet gap 78 for the drink.

Capsule 2, housed in sleeve 40 and in particular in the capsule seat 42c, is arranged between head 56 of the plate group 50 and seat 74 of the housing group 70.

The infusion device 1 is provided with controlled rotation means suitable for acting on sleeve 40 to impart a rotation thereof around the longitudinal axis Z correlated to the translation along said longitudinal axis Z.

According to a preferred embodiment, said rotation means provide a structural engagement between sleeve 40 and the housing group 70, such as to form a screw - nut system.

For example, the rotation means comprise a pin 80, projecting internally radially from the side wall 42a of sleeve 40, and an outbound section 82 of a slot 84, having an axial and circumferential shape, made externally to the housing body 72 of the housing group 70. Pin 80 slides in slot 84 so that the advancement of the pin in the outbound section 82 causes the rotation of sleeve 40.

Furthermore, slot 84 comprises a return section 86, which continues the outbound section 82, having a substantially axial shape, for example rectilinear, so that the sliding of pin 80 in the return section 86 of slot 84 does not cause any substantial rotation of sleeve 40.

In other words, in a forward step, sleeve 40 translates towards the housing group 70 and switches from a retracted limit position, in which window 44 is arranged aligned at the top with opening 16 of the casing for the introduction of the capsule, to an advanced limit position, in which the sleeve is rotated relative to the retracted limit position and opening 16 is arranged underneath for discharging capsule 2 by falling.

In a return step, sleeve 40 translates from the advanced position to the retracted limit position, but pin 80 slides in the return section 86 of slot 84, so that sleeve 40 does not undergo any substantial rotation and window 44 remains positioned underneath for the exit of the capsule by falling.

Moreover, preferably, the infusion device 1 comprises return means which permanently bias sleeve 40 in the direction of rotation opposite to that which occurs between the retracted limit position and the advanced limit position.

For example, said return means are elastic and comprise a torsion spring 90, for example fixed to the bottom wall 42b of sleeve 40 and to the translating member 32 of the actuator group 20.

During the outbound step, spring 90 is loaded, opposing a torsion resistance to the rotation of sleeve 40.

Furthermore, the infusion device 1 comprises blocking means suitable for preventing the opposite rotation of the sleeve in the advanced limit position.

Said blocking means comprise for example a blocking body 100 and a biasing member 102, such as a clip, operating between a fixed support, for example the side wall 8 of the casing, and said blocking body 100 for permanently pushing it towards the sleeve.

The blocking body 100 has frontally, i.e. facing sleeve 40, a prominence 106 which forms a sliding surface 108 having a predefined axial extension.

Said blocking means further comprise a blocking tab 110 projecting externally radially from the side wall 42a of sleeve 40. Tab 110 is chamfered so as to form a guide for the snap coupling with the blocking body 100.

During the outbound step, due to the rotation of sleeve 40, the blocking tab 110 interferes with the blocking body 100, coupling snap-wise therewith. Accordingly, in the advanced limit position, despite the permanent action of the return means (for example, the torsion spring 90), sleeve 40 remains in the rotated position imposed by the rotation means.

During the return step, pin 80 moves in the return section 86 and moreover, the blocking tab 110 slides on sliding surface 108 of prominence 106, without disengaging in rotation from the blocking body 100.

Continuing in the return step, once pin 80 has exited from the return section 86 of slot 84, the blocking tab 110 still slides on the sliding surface 108 of prominence 106, continuing to prevent the counter-rotation of sleeve 40.

During the return stroke, when capsule 2 has exited by falling from window 44 arranged underneath, the blocking tab 110 and prominence 106 of the blocking body 100 are disengaged and the sleeve makes a counter-rotation under the action of the return means.

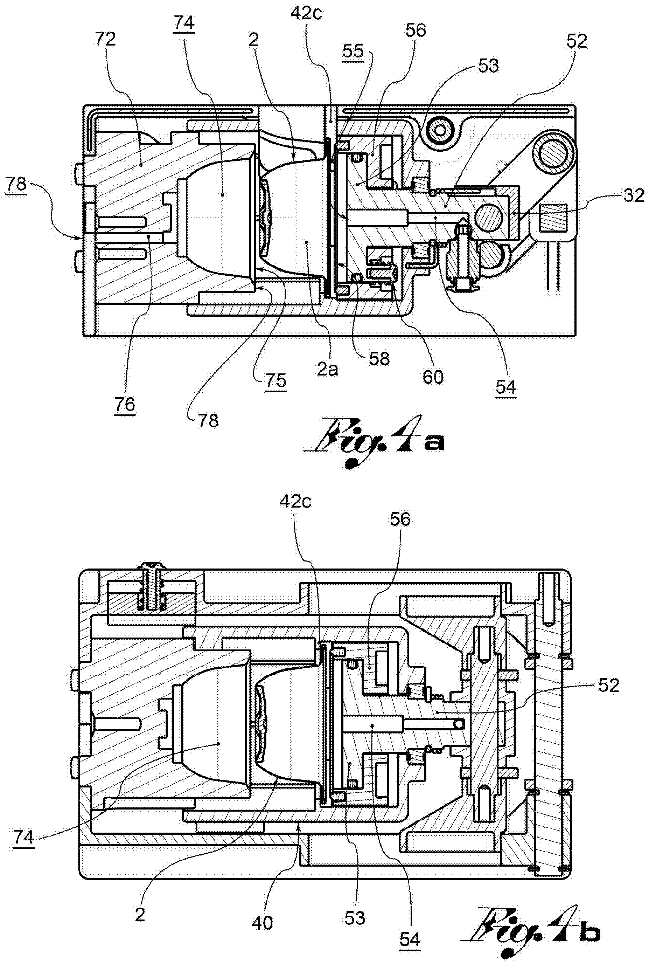

In the normal operation of the machine, the infusion device 1 is initially in an initial open configuration, in which lever 24 is raised, head 56 of the plate group 50 is in the advanced limit position and sleeve 40 is in the retracted limit position (figures 4a and 4b).

Capsule 2 is introduced into sleeve 40 through opening 16 of the casing and window 44 and stays in said sleeve 40, resting on the side wall 42a thereof, stably inserted in the capsule seat 42c; container 2a faces towards the housing group 70 and film 2b towards head 56.

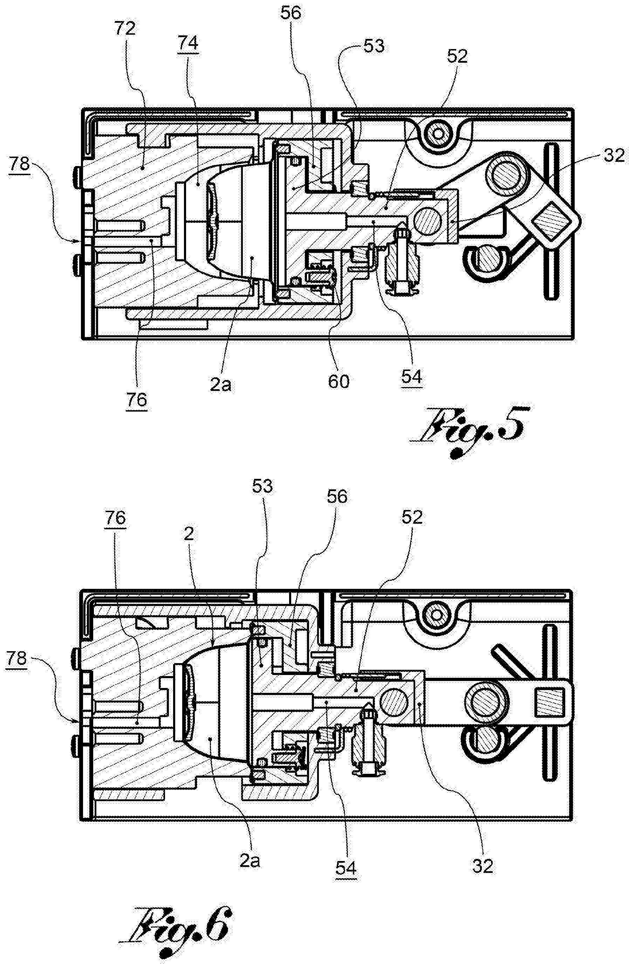

By actuating the actuator group 20, for example via lever 24, the plate group 50 translates towards the housing group 70 and sleeve 40 translates towards the housing group 70 and rotates at the same time (forward step, figure 5).

Advantageously, capsule 2 remains well aligned thanks to the insertion in the capsule seat 42c.

In such a step, the return means (for example, the torsion spring 90), are loaded and bias sleeve 40 in counter-rotation.

Meanwhile, container 2a of capsule 2 penetrates into seat 74 of the housing body 72 and settles therein, the sealing rim 58 of head 56 settles against film 2b of the capsule and presses collar 2c thereof against the seat rim 78 of the housing body 72, while head 56 moves to the retracted limit position.

The infusion device 1 then moves to a final closed configuration (figure 6), in which sleeve 40 is engaged with the blocking body 100 via the blocking means, window 44 is arranged underneath, head 56 is in the retracted limit position and the sleeve is in the advanced limit position.

While the closing device 1 remains in the closed configuration, the electric machine performs an operating cycle, usually electronically controlled, for the production of the drink.

In particular, the hot water under pressure is fed into the inner duct 54 of stem 52.

Through one or more holes made through film 2b, for example through the puncturing tips of plate 53, the water penetrates into container 2; or, if a pod is used, the water simply penetrates inside under the action of pressure.

Through one or more holes made on the bottom of container 2a, for example using a punch, or by simple action of the water under pressure through the pod, the drink exits from the capsule or pod and enters the outlet duct 76, from which it is moved towards a takeaway container.

Once the operating cycle has ended, the used capsule must be ejected.

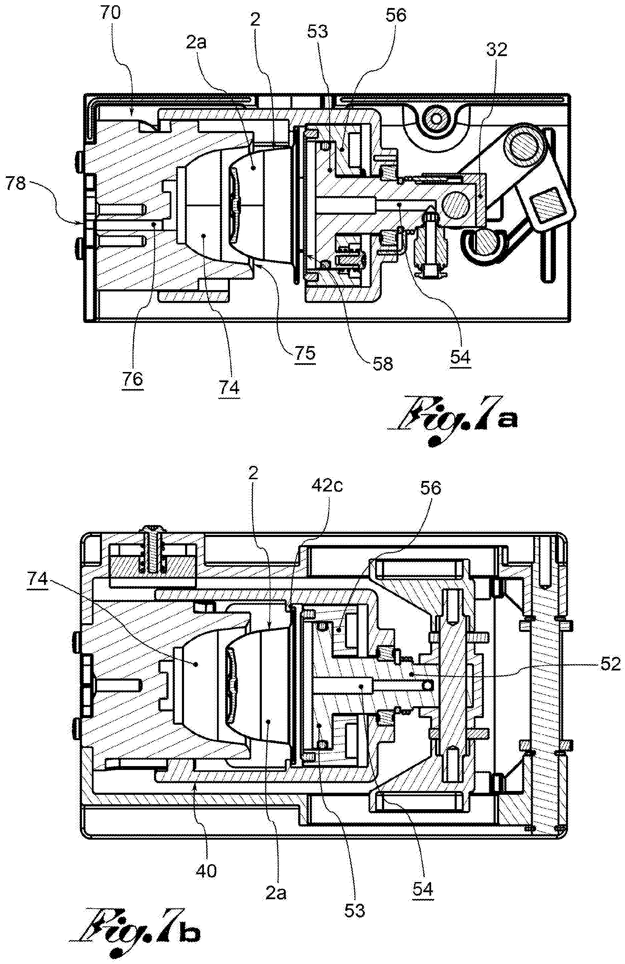

By actuating the actuator group 20, for example by lifting lever 24, the plate group 50 translates away from the housing group 70 and head 56 returns to the advanced limit position, sleeve 40 translates away from the housing group 70, without substantial rotation, by the action of the blocking means, so that window 40 remains in the lower position (figures 7a and 7b).

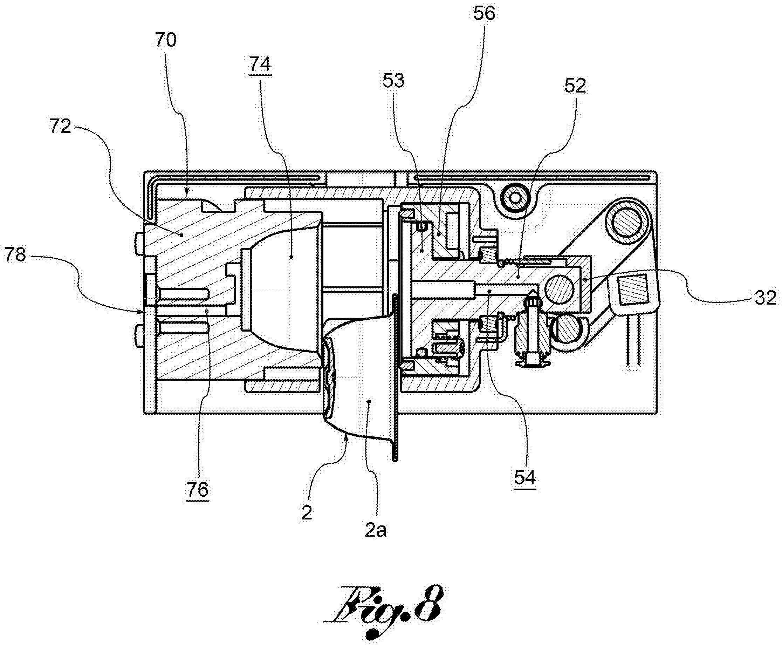

In this step, capsule 2, still housed in the capsule seat 42c, retracts along with sleeve 40 and is therefore extracted from seat 74 of the housing group 70; capsule 2 falls definitively when sleeve 40 and head 56 are sufficiently distant from the housing group 70 (figure 8) .

Once the capsule has fallen, the blocking tab 110 of sleeve 40 is now released from the blocking body 100, so that sleeve 40 carries out a counter-rotation by the action of the return means. The device therefore returns to the initial open configuration, ready to be used again.

According to an embodiment variation, the infusion device 1 comprises electric means 200 for driving the actuator group 20.

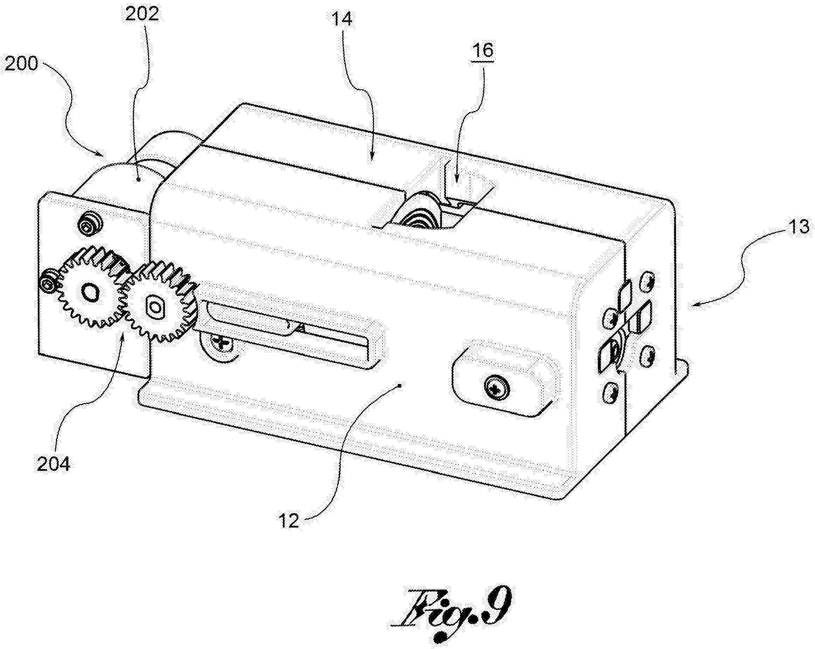

For example, said electric driving means 200 comprise an electric motor 202, for example fixed to the casing, on the side opposite to bottom 13, and a linkage 204, for example a reducer, for transmitting the motion from the electric motor 202 of the driver pin 22 of the actuator group 20 (figure 9).

Innovatively, the infusion device according to the present invention is extremely effective in the execution of the many functions thereof while retaining a simple structure which guarantees a high reliability of the component.

It is clear that a man skilled in the art can make changes to the infusion device described above in order to meet specific needs.

For example, according to an embodiment variant, the infusion device is made so that the rotation in one direction takes place partially in the forward step and is then completed in the return step, in any case so that when the capsule is free and ready to exit, the window of the sleeve is positioned underneath.

For example, according to a further embodiment variant, the infusion device is made so that only a translation of the sleeve is carried out in the forward step while the rotation is entirely in the return step, in any case so that when the capsule is free and ready to exit, the window of the sleeve is positioned underneath.

Such modifications are to be deemed as comprised within the scope of protection as defined by the following claims.

## Claims

1. Infusion device (1) for an electric machine for the production of a hot drink from a capsule (2) or from a pod, comprising:
- a housing group (70) having a seat (74) for the housing of a capsule (2) by a container (2a) of said capsule;
- a plate group (50) translatable upon command towards the housing group (70) along a longitudinal axis (Z), comprising a head (56) having an annular sealing rim (58) suitable for forming a sealing contact with the capsule (2) ;
- a sleeve (40), translatable towards the housing group (70) along said longitudinal axis (Z), comprising a side wall (42b) having a window (44), said sleeve having a capsule seat (42c) accessible to the capsule through the window (44) and positioned between the head (56) of the plate group and the seat (74) of the housing group (70);
- rotation means suitable for performing a rotation of the sleeve (40) correlated to the translation, so that in an initial open configuration, the capsule (2) is suitable for being inserted through the window (44) and stably housed in the capsule seat (42c) and in a capsule falling configuration, the window (44) is positioned underneath for the falling of the used capsule and the exit from said sleeve (40).

2. Device according to claim 1, wherein the rotation means provide for a structural coupling between the sleeve (40) and the housing group (70).

3. Device according to claim 2, wherein the rotation means comprise a pin (80), projecting internally radially from the side wall (42a) of the sleeve (40), and an outbound section (82) of a slot (84), having an axial and circumferential shape, made externally to the housing group (70), in which the pin (80) slides.

4. Device according to claim 3, wherein the slot (84) comprises a return section (86), which continues the outbound section (82), having a shape such as not to cause any substantial rotation of the sleeve (40).

5. Device according to any of the previous claims, wherein the plate group (50) comprises a stem (52) which slidingly supports the head (56) and pressure means (60) suitable to act so as to reciprocally distance the sleeve (40) from the head (56).

6. Device according to any of the previous claims, comprising return means which permanently bias the sleeve (40) in the direction of rotation opposite that caused by the rotation means.

7. Device according to any of the previous claims, comprising blocking means, suitable for preventing the opposite rotation of the sleeve starting from a predefined axial position of the sleeve (40).

8. Device according to claim 7, wherein said blocking means comprise a blocking body (100) having a prominence (106) towards the sleeve (40) and a blocking tab (110) projecting externally radially from the side wall (42a) of the sleeve (40), suitable to form a snap-coupling.

9. Device according to any of the previous claims, comprising an actuator group (20) suitable for being actuated so as to move the plate group (50) and the sleeve (40), comprising a rotatable driver pin (22), a connecting rod (26), hinged at the top to an axis parallel to and offset from the rotation axis of the driver pin (22) and integral in rotation with said driver pin (22), while the foot of said connecting rod (26) translates alternately along said longitudinal axis (Z).

10. Device according to claim 9, comprising a lever (24) for the manual operation of the actuation group (20).

11. Device according to claim 9, comprising electric drive means comprising an electric motor (202) and a kinematic mechanism (204) for operating the actuation group (20).

12. Device according to any of the previous claims, comprising a casing provided at the top with an opening (16) for the insertion of the capsule (2), said opening being shaped for the insertion of a capsule according to a predefined position.

13. Electric machine for the production of a hot drink from a capsule (2), comprising an infusion device made according to any of the previous claims.

14. Working method of an infusion device (1) of an electric machine for the production of a hot drink, comprising the steps of:
- inserting a capsule (2) or a pod containing a composition, for example in powder or in leaves, in a capsule seat (2c) of a sleeve (40) of the device (1) through a window (44) of said sleeve;
- translating the sleeve to engage it with a housing group;
- performing an operating cycle to make the drink;
- emptying the used capsule from the window (44), positioned underneath the sleeve by rotation thereof.

## Patentansprüche

1. Infusions- bzw. Aufgussvorrichtung (1) für eine elektrische Maschine für die Herstellung eines Heißgetränks aus einer Kapsel (2) oder aus einem Pad, die umfasst:
- eine Gehäusegruppe (70) mit einem Auflager (74) für das Aufnehmen einer Kapsel (2) durch einen Behälter (2a) für die Kapsel;
- eine Plattengruppe (50), die auf Befehl entlang einer Längsachse (Z) in Richtung der Gehäusegruppe (70) verschiebbar ist, die einen Kopf (56) mit einem ringförmigen Dichtungsrand (58) umfasst, welcher geeignet ist einen dichtenden Kontakt mit der Kapsel (2) zu bilden;
- eine Hülse (40), die in Richtung der Gehäusegruppe (70) entlang der Längsachse (Z) verschiebbar ist, die eine Seitenwand (42b) mit einem Fenster (44) umfasst, wobei die Hülse ein Kapselauflager (42c) hat, das von der Kapsel durch das Fenster (44) zugänglich ist und zwischen dem Kopf (56) der Plattengruppe und dem Auflager (74) der Gehäusegruppe (70) positioniert ist;
- Drehmittel, die geeignet sind, eine Drehung der Hülse (40), die mit der Verschiebung korreliert ist, durchzuführen, so dass die Kapsel (2) in einer anfänglich offenen Konfiguration geeignet ist, durch das Fenster (44) eingesetzt und in dem Kapselauflager (42c) stabil aufgenommen zu werden, und wobei das Fenster (44) in einer Kapselfallkonfiguration für das Fallen der benutzten Kapsel und den Austritt aus der Hülse (40) unterhalb positioniert ist.

2. Vorrichtung nach Anspruch 1, wobei die Drehmittel für eine bauliche Kopplung zwischen der Hülse (40) und der Gehäusegruppe (70) sorgen.

3. Vorrichtung nach Anspruch 2, wobei die Drehmittel einen Stift (80), der von der Seitenwand (42a) der Hülse (40) radial nach innen vorsteht, und einen nach außen laufenden Abschnitt (82) eines Schlitzes (84) umfassen, der eine axiale und umlaufende Form hat, die außerhalb der Gehäusegruppe (70) hergestellt ist, in welcher der Stift (80) gleitet.

4. Vorrichtung nach Anspruch 3, wobei der Schlitz (84) einen Rückführungsabschnitt (86) umfasst, der weiter zu dem nach außen laufenden Abschnitt (82) geht, der eine derartige Form hat, dass er keine wesentliche Drehung der Hülse (40) bewirkt.

5. Vorrichtung nach einem der vorhergehenden Ansprüche, wobei die Plattengruppe (50) einen Schaft (52), der den Kopf (56) verschiebbar hält, und Druckmittel (60) umfasst, die geeignet sind, derart zu wirken, dass sie die Hülse (40) wechselseitig von dem Kopf (56) beabstanden.

6. Vorrichtung nach einem der vorhergehenden Ansprüche, die Rückführungsmittel umfasst, die die Hülse (40) dauerhaft in die Drehrichtung vorspannen, die entgegengesetzt zu der von dem Drehmittel Bewirkten ist.

7. Vorrichtung nach einem der vorhergehenden Ansprüche, die Sperrmittel umfasst, die geeignet sind, um die entgegengesetzte Drehung der Hülse beginnend von einer vordefinierten Axialposition der Hülse (40) zu verhindern.

8. Vorrichtung nach Anspruch 7, wobei die Sperrmittel einen Sperrkörper (100) mit einem Vorsprung (106) in Richtung der Hülse (40) und einem Sperransatz (110) umfassen, der von der Seitenwand (42a) der Hülse (40) radial nach außen vorsteht, der geeignet ist, eine Schnappverbindung zu bilden.

9. Vorrichtung nach einem der vorhergehenden Ansprüche, die eine Aktuatorgruppe (20) umfasst, die geeignet ist, betätigt zu werden, um die Plattengruppe (50) und die Hülse (40) zu bewegen, die einen drehbaren Antriebsstift (22), eine Verbindungsstange (26), die an der Oberseite gelenkig an einer Achse befestigt ist, die parallel zu der Drehachse des Antriebsstifts (22) und zu dieser versetzt ist und die sich integral mit dem Antriebsstift (22) dreht, umfasst, während das Fußende der Verbindungsstange (26) sich alternierend entlang der Längsachse (Z) verschiebt.

10. Vorrichtung nach Anspruch 9, die einen Hebel (24) für die manuelle Bedienung der Aktuatorgruppe (20) umfasst.

11. Vorrichtung nach Anspruch 9, die elektrische Antriebsmittel umfasst, die einen Elektromotor (202) und einen kinematischen Mechanismus (204) für das Betreiben der Aktuatorgruppe (20) umfassen.

12. Vorrichtung nach einem der vorhergehenden Ansprüche, die ein Gehäuse umfasst, das an der Oberseite mit einer Öffnung (16) für das Einsetzen der Kapsel (2) versehen ist, wobei die Öffnung für das Einsetzen einer Kapsel entsprechend einer vordefinierten Position geformt ist.

13. Elektrische Maschine für die Herstellung eines Heißgetränks aus einer Kapsel (2), die eine Aufgussvorrichtung umfasst, die nach einem der vorhergehenden Ansprüche hergestellt ist.

14. Arbeitsverfahren einer Aufgussvorrichtung (1) einer elektrischen Maschine für die Herstellung eines Heißgetränks, das die folgenden Schritte umfasst:
- Einsetzen einer Kapsel (2) oder eines Pads, die/das eine Zusammensetzung, zum Beispiel aus Pulver oder Blättern, enthält, in ein Kapselauflager (2c) einer Hülse (40) der Vorrichtung (1) durch ein Fenster (44) der Hülse;
- Verschieben der Hülse, um sie mit einer Gehäusegruppe in Eingriff zu bringen;
- Durchführen eines Betriebszyklus, um das Getränk herzustellen;
- Entleeren der benutzten Kapsel von dem Fenster (44), das unterhalb der Hülse positioniert ist, durch deren Drehung.

## Revendications

1. Dispositif d'infusion (1) pour une machine électrique destinée à la production d'une boisson chaude à partir d'une capsule (2) ou d'une dosette, comprenant :
- un groupe logement (70) ayant un siège (74) pour loger une capsule (12) par un contenant (2a) de ladite capsule ;
- un groupe plaque (50) pouvant se translater sur commande vers le groupe logement (70) le long d'un axe longitudinal (Z), comprenant une tête (56) ayant un rebord d'étanchéité annulaire (58) approprié pour former un contact d'étanchéité avec la capsule (2) ;
- un manchon (40), pouvant se translater vers le groupe logement (70) le long dudit axe longitudinal (Z), comprenant une paroi latérale (42b) ayant une fenêtre (44), ledit manchon ayant un siège de capsule (42c) accessible à la capsule par le biais de la fenêtre (44) et positionné entre la tête (56) du groupe plaque et le siège (74) du groupe logement (70) ;
- un moyen de rotation approprié pour effectuer une rotation du manchon (40) corrélée à la translation, de telle sorte que, dans une configuration ouverte initiale, la capsule (2) est appropriée pour être insérée à travers la fenêtre (44) et logée de manière stable dans le siège de capsule (42c) et, dans une configuration de chute de capsule, la fenêtre (44) est positionnée en-dessous pour la chute de la capsule usagée et la sortie dudit manchon (40).

2. Dispositif selon la revendication 1, dans lequel le moyen de rotation permet un couplage structural entre le manchon (40) et le groupe logement (70).

3. Dispositif selon la revendication 2, dans lequel le moyen de rotation comprend une broche (80), se projetant radialement vers l'intérieur depuis la paroi latérale (42a) du manchon (40), et une section sortante (82) d'une fente (84), ayant une forme axiale et circonférentielle, créée à l'extérieur du groupe logement (70), dans lequel coulisse la broche (80).

4. Dispositif selon la revendication 3, dans lequel la fente (84) comprend une section de retour (86), qui continue la section sortante (82), ayant une forme de manière à ne pas provoquer de rotation sensible du manchon (40).

5. Dispositif selon l'une quelconque des revendications précédentes, dans lequel le groupe plaque (50) comprend une tige (52) qui supporte en coulissement la tête (56) et un moyen de pression (60) approprié pour agir de manière à éloigner réciproquement le manchon (40) de la tête (56).

6. Dispositif selon l'une quelconque des revendications précédentes, comprenant un moyen de retour qui sollicitent en permanence le manchon (40) dans la direction de rotation opposée à celle provoquée par le moyen de rotation.

7. Dispositif selon l'une quelconque des revendications précédentes, comprenant un moyen de blocage, approprié pour empêcher la rotation opposée du manchon à partir d'une position axiale prédéfinie du manchon (40).

8. Dispositif selon la revendication 7, dans lequel ledit moyen de blocage comprend un corps de blocage (100) ayant une protubérance (106) vers le manchon (40) et une patte de blocage (110) se projetant radialement vers l'extérieur depuis la paroi latérale (42a) du manchon (40), appropriée pour former un accouplement par encliquetage.

9. Dispositif selon l'une quelconque des revendications précédentes, comprenant un groupe actionneur (20) approprié pour être actionné de manière à déplacer le groupe plaque (50) et le manchon (40), comprenant une broche d'entraînement rotative (22), une barre de liaison (26), s'articulant au niveau d'une partie supérieure sur un axe parallèle à et décalé de l'axe de rotation de la broche d'entraînement (22) et faisant corps en rotation avec ladite broche d'entraînement (22), alors que le pied de ladite barre de liaison (26) se translate en alternance le long dudit axe longitudinal (Z).

10. Dispositif selon la revendication 9, comprenant un levier (24) pour le fonctionnement manuel du groupe actionneur (20).

11. Dispositif selon la revendication 9, comprenant un moyen d'entraînement électrique comprenant un moteur électrique (202) et un mécanisme cinématique (204) pour faire fonctionner le groupe actionneur (20).

12. Dispositif selon l'une quelconque des revendications précédentes, comprenant un carter pourvu, au niveau de la partie supérieure, d'une ouverture (16) pour l'insertion de la capsule (2), ladite ouverture étant façonnée pour l'insertion d'une capsule selon une position prédéfinie.

13. Machine électrique pour la production d'une boisson chaude à partir d'une capsule (2), comprenant un dispositif d'infusion créé selon l'une quelconque des revendications précédentes.

14. Procédé de fonctionnement d'un dispositif d'infusion (1) d'une machine électrique pour la production d'une boisson chaude, comprenant les étapes consistant à :
- insérer une capsule (2) ou une dosette contenant une composition, par exemple en poudre ou en feuilles, dans un siège de capsule (2c) d'un manchon (40) du dispositif (1) à travers une fenêtre (44) dudit manchon ;
- translater le manchon pour l'engager avec un groupe logement ;
- effectuer un cycle de fonctionnement pour fabriquer la boisson ;
- vider la capsule usagée par la fenêtre (44), positionnée sous le manchon par rotation de celui-ci.
